# Europäisches Patentamt
# European Patent Office
# Office européen des brevets

(19)

(11) Publication number: **0 020 563 B2**

(12) ## NEW EUROPEAN PATENT SPECIFICATION

(45) Date of publication of the new patent specification: 05.07.89

(51) Int. Cl.⁴: **F 15 B 11/16, B 60 K 11/06**

(21) Application number: 79901484.0

(22) Date of filing: 20.09.79

(86) International application number:
PCT/US 79/00781

(87) International publication number:
WO 80/01191 (12.06.80 Gazette 80/13)

(54) MOTOR-VALVE APPARATUS FOR HYDRAULIC FAN DRIVE SYSTEM.

(30) Priority: 06.12.78 US 966984

(43) Date of publication of application:
07.01.81 Bulletin 81/1

(45) Publication of the grant of the patent:
15.06.83 Bulletin 83/24

(45) Mention of the opposition decision:
05.07.89 Bulletin 89/27

(84) Designated Contracting States:
DE FR GB

(56) References cited:
DE-B- 1 678 603
DE-C- 1 908 922
FR-A- 2 173 596
US-A- 1 256 709
US-A- 2 769 394
US-A- 2 777 287
US-A- 2 948 268
US-A- 3 055 473
US-A- 3 401 605
US-A- 3 474 811
US-A- 3 587 963
US-A- 3 659 567
US-A- 3 664 129

Krausskopf - Taschenbücher "Ölhydraulik und
Pneumatic", Band 7, Anwendungen der Ölhydraulik, Teil
1, Seite 193-210, Otto-Krausskopf-Verlag GmbH,
Mainz 1972 "Hydraulics & Pneumatics", August 1967,
Seite 96-102

(73) Proprietor: **EATON CORPORATION, 100 Erieview Plaza,
Cleveland Ohio 44114 (US)**

(72) Inventor: **GOSCENSKI, Edward John, Jr., 2267 Gethings
Road, Battle Creek, MI 49017 (US)**

(74) Representative: **Wright, Peter David John (GB) et al,
R.G.C. Jenkins & Co. 26 Caxton Street, GB-London
SW1H 0RJ (GB)**

ACTORUM AG

## Description

### Background of the disclosure

The present invention relates to hydraulic systems for driving the radiator cooling fans of vehicle engines, anbd more particularly, to an improved motor-valve apparatus for use in such fan drive systems.

Although it will become apparent from the subsequent description that the present invention has many uses and applications, it is especially advantageous when used to drive the radiator cooling fan of a vehicle engine, and will be described in connection therewith.

Originally, radiator cooling fans were driven directly, i.e., by some form of mechanical connection between the fan and the engine crankshaft. For example, the fan was frequently bolted to a flange on a shaft projecting forwardly from the engine water pump, such that the fan speed was either the same as the engine speed, or directly proportional thereto, depending upon the belt and pulley ratios between the crankshaft and the water pump. The proportionality between fan speed and engine speed is desirable at lower engine speeds (e.g., below 3000 rpm), but is undesirable at higher speeds were additional air flow through the radiator becomes unnecessary, wastes engine horsepower and creates excessive noise.

More recently, viscous fan drives have been developed which overcome the above mentioned problems whereby direct fan drive systems have excessive fan speed at higher engine speeds. Viscous fan drives transmit torque by means of a viscous fluid contained within a shear space defined between an input member and an output member, such that rotation of the input member causes a viscous shear drag to be exerted on the output member, transmitting torque thereto. See U.S. Patent No. 2 948 268. Viscous fan drives of the type shown in the cited patent have an inherent torque-limiting characteristic, such that the fan speed increases roughly proportional to the engine speed, up to a certain engine speed such as 2500 rpm, then the fan speed levels off and remains constant as engine speed and torque continue to rise. The resulting graph of fan speed versus engine speed has become known as a «viscous curve», and it is now generally a requirement of U.S. vehicle manufacturers that any drive system, whether of the viscous type or not, operate in accordance with the well-known «viscous curve».

A further step in the development of viscous fan drives was represented by U.S. Patent No. 3 055 473, which discloses a viscous fan drive having the same «viscous curve» during its normal operation condition (engaged), but in addition, has the ability to become disengaged in response to ambient air temperature being below a predetermined level, thus providing a substantial saving of engine horsepower when normal operation of the fan is unnecessary for sufficient cooling of the engine.

Both of the conventional fan drive arrangements discussed above can be used only with a standard in-line engine, i.e., one having the crankshaft oriented axially. However, in recent years many auto makers, especially in Europe, have elected to use a transverse engine, providing front wheel drive, for reasons which are now well known in the art, and the trend toward transverse engines, especially in the four and six cylinder range, is extending to the U.S. as well. In European transverse engine automobiles, the cooling requirements have generally been met rather easily for various reasons, including the fact that the majority of the vehicles have been used in the generally colder regions, such as the Scandinavian countries. However, the nature of the U.S. automobile market is such that all transverse engine vehicles marketed in the U.S. will be required to have sufficient cooling capacity to operate satisfactorily under the conditions prevailing in the hot southern regions of the country.

A major approach to the cooling of transverse engines is the use of hydraulic systems, including a hydraulic pump driven by the engine and a hydrualic motor connected to the fan. It will be appreciated by those skilled in the art of automotive engines and engine accessories that the addition of a complete hydraulic system creates problems relating to space requirements, and undesirably increases both the weight and cost of the vehicle. Accordingly, those attempting to design a satisfactory hydraulic fan drive system have tried to reduce the space, weight, and cost of such systems by utilizing at least one of the hydraulic components in at least two different vehicle hydrualic systems. For example, there have been frequent attempts to utilize the power steering pump to provide pressurized fluid to operate a hydraulic fan motor, as well as the power steering gear (see U.S. Patent No. 2 777 287). In such systems, inter-action between the fan motor and the other hydraulic actuator (such as the power steering gear) have generally resulted in unsatisfactory performance by the fan motor, or the steering gear, or both.

One design approach to such systems has been to place the fan motor in series with the power steering gear, but upstream therefrom, such that the flow through the fan motor also passes through the steering gear. See U.S. Patent No. 3 659 567. A major drawback of such prior art systems has been a constant flow rate through the fan motor over all engine speeds from idle to maximum, such that fan speed is constant regardless of engine speed. Typically, the results with such a system is that more cooling than is needed is provided at lower engine speeds, thereby wasting engine horsepower, or the cooling may be only marginal at higher engine speeds, or both. In addition, such systems require a relatively high fan motor pressure and pump horsepower at lower engine speeds when the pressure drop across the power steering gear is greatest, thus making it difficult to satisfy the pressure and flow requirement of both the fan and steering system simultaneously.

In European application No. 79 900 580.6, published on 13.12.79 as WO 79/01084, the embodiment of the motor-valve apparatus illustrated therein includes a temperature responsive bypass valve which might be termed «mechanical position sensitive». By that it is meant that the operating characteristics of the bypass valve are largely determined by the setting of the mechanical connection between the bypass valve and the temperature responsive device, i.e., the power pill. Partially as a result of the mechanical connection to the temperature responsive device, a preliminary adjustment of the position of the bypass valve is required, and although the bypass valve may be set to operate satisfactorily at a given flow rate, it may not be fully satisfactory at other flow rates.

Summary of the invention

The present invention provides an improved motor-valve apparatus for a hydraulic fan drive system in which the operation of the bypass valve is not "mechanical position sensitive".

Instead, the bypass valve is responsive to changes in a signal pressure, which is controlled by a pilot valve assembly.

According to the present invention, there is provided motor valve apparatus for use in a hydraulic fan drive system including a pump having a fluid outlet port, a fluid inlet port, and a pumping element operable to deliver fluid at a rate proportional to engine speed, the pump comprising the sole source of pressurized fluid for the system and including flow control valve means operable to limit the fluid delivery rate of the pump to X at higher engine speeds, said motor-valve apparatus comprising:

(a) housing means defining an inlet port for connection to the outlet port of the pump and further defining at least one outlet port, said one outlet port being in fluid communication with the inlet port of the pump;

(b) a positive displacement, fluid pressure actuated rotary device operably disposed within said housing means, said device being adapted to transmit torque to a fan, and defining expanding and contracting fluid chamber;

(c) said housing means defining a fluid pressure port and a fluid return port communicating with said expanding and contracting fluid chambers respectively;

(d) said housing means defining in inlet passage, an outlet passage, and a bypass passage communicating between said inlet and outlet passages, said inlet passage permitting fluid communication between said inlet port and said pressure port, and said outlet passage providing fluid communication between said return port and said outlet port;

(e) bypass valve means disposed in said inlet passage and including a bypass valve member movable between a first position substantially preventing fluid communication from said inlet passage to said bypass passage, and a second position permitting fluid flow from said inlet passage to said bypass passage at a flow rate which is at least a major portion of X, the bypass flow through said bypass passage and the return flow through said return port being recombined in said outlet passage;

(f) said valve member being biased toward said second position by fluid pressure in said inlet passage;

(g) said valve member and said housing means co-operating to define a signal chamber, said valve member being biased toward said first position by fluid pressure in said signal chamber;

(h) means communicating pressurized fluid into said signal chamber; and

(i) pilot valve means movable between a first position blocking fluid communication between said signal chamber and said outlet passage, and a second position permitting fluid communication from said signal chamber to said outlet passage.

(j) wherein the force required to move the pilot valve means is a magnetic force provided by an electromagnetic coil (139, 239).

Brief description of the drawings

Fig. 1 is a somewhat schematic top plan view of the engine compartment of a vehicle utilizing a hydraulic fan drive system in accordance with the present invention.

Fig. 2 is a hydraulic schematic of a fan drive system of the type with which the present invention may be utilized.

Fig. 3 is a view, partly in elevation, and partly in cross section, of the motor-valve apparatus of the present invention.

Fig. 4 is a transverse cross section taken on line 4–4 of Figure 3.

Fig. 5 is a fragmentary view similar to Figure 4, in a different operating condition.

Fig. 6 is a fragmentary cross section, similar to Figure 4, on a larger scale.

Fig. 7 is a fragmentary cross section, similar to Figure 6, on a substantially larger scale.

Fig. 8 is a fragmentary cross section, similar to Figure 6, illustrating an alternative embodiment of the present invention.

Description of the preferred embodiments

System

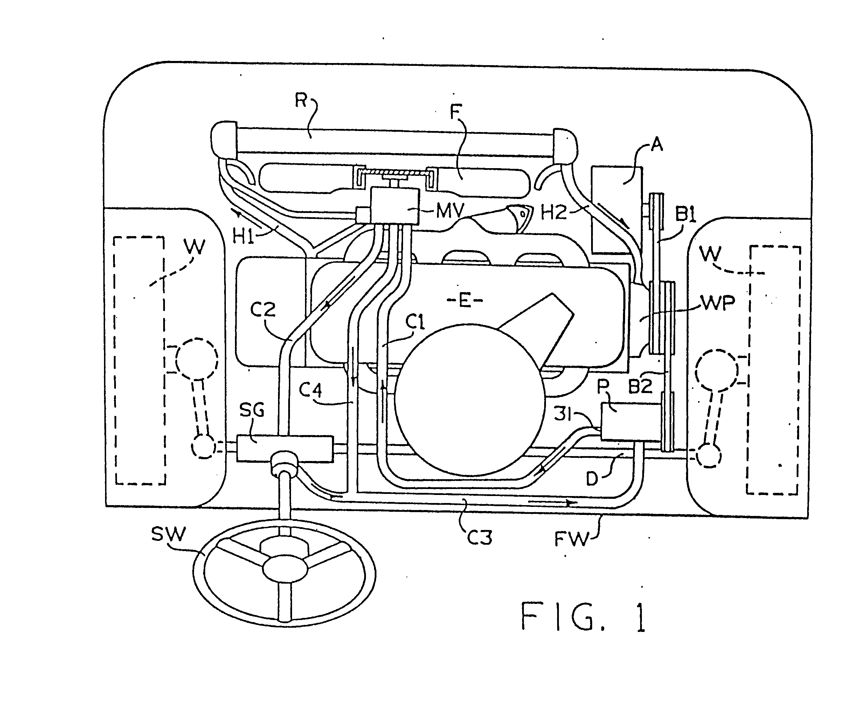

Referring now to the drawings, which are not intended to limit the invention, Figure 1 is a somewhat schematic top plan view of the engine compartment of a vehicle utilizing the present invention. Transversely disposed within the compartment is a vehicle engine E including means (not shown) for transmitting torque to a pair of ground-engaging front wheels W. Disposed adjacent the right-hand end of the engine E, and driven thereby, is a water pump WP including a pair of pulleys, one of which drives a V-belt B1, which drives the alternator A, and the other of which drives a V-belt B2 which drives a power steering pump P. As is well known in the art, the power steering pump is driven at a speed having a certain, fixed relationship to engine speed, depending upon the ratio of the pulleys which are interconnected by the belt B2.

Disposed adjacent the forward portion of the vehicle engine compartment is a radiator R. A hose H1 communicates relatively hot water from the engine E to the top tank of the radiator R, while a second hose H2 communicates relatively cooler water from the radiator bottom tank to the engine water pump WP.

Situated in its normal location, just ahead of a fire wall FW is an open-center, hydraulic booster-type steering gear mechanism SG of the type commonly used, which is responsive to the rotation of a steering wheel SW to transmit a steering force to a drag link D.

The power steering pump P generates a flow of pressurized fluid which is communicated by means of a conduit C1 to a motor-valve apparatus MV, to which is operably attached a radiator cooling fan F. Some of the fluid leaving the motor-valve apparatus MV is communicated by conduit C2 to the open-center steering gear mechanism SG, and from the steering gear SG back to the pump P by means of a conduit C3. Alternatively, as will be described in greater detail subsequently, fluid may flow from the motor-valve apparatus MV by means of a conduit C4 which bypasses the steering gear SG and communicates with the conduit C3.

As is well known in the art of power steering pumps, a bypass flow control arrangement is commonly used and provides an output flow from a discharge port 31 of the pump P which is directly proportional to engine speed, and pump input speed, up to a predetermined flow rate, at which point the flow rate from the discharge port 31 levels off and remains constant as engine speed continues to rise.

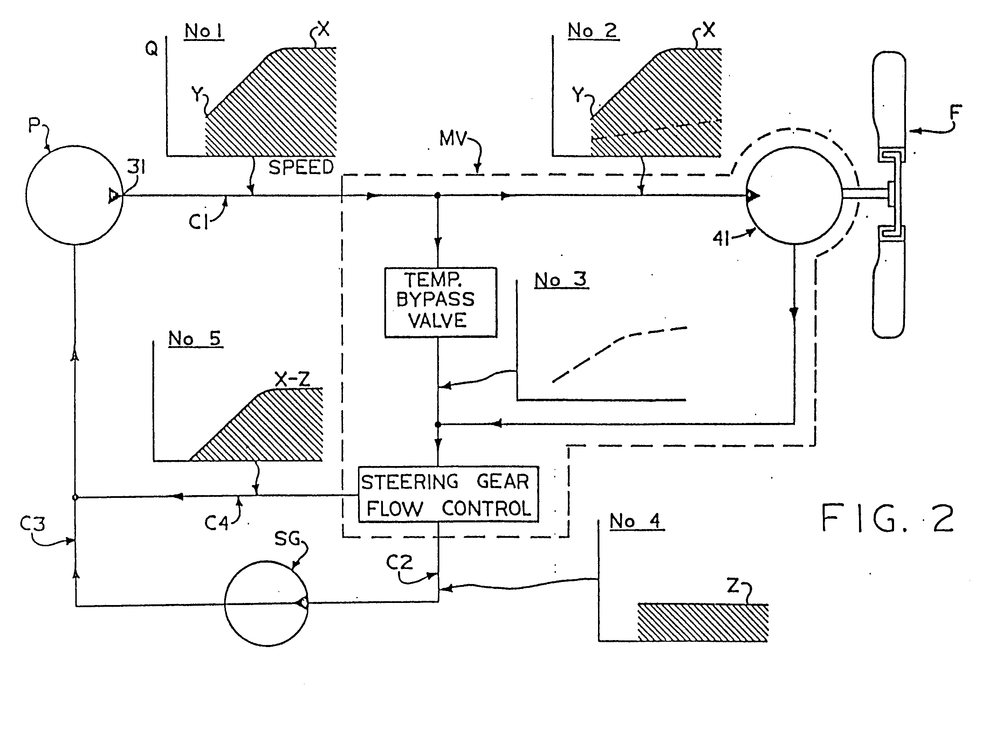

The above-described flow control feature is illustrated graphically in Figure 2, which is a hydraulic schematic of a fan drive system with which the present invention may be used. In order to provide a better understanding of the invention, various portions of the schematic of Figure 2 have associated therewith a graph of flow versus speed (either engine or pump input). It should be noted that the graphs do not include numbers, indicating specific flow quantities or specific speeds, but are intended merely to indicate relative flow quantities for purposes of describing the invention schematically and conceptually. However, it should also be noted that the graph cover what will be referred to hereinafter as the "range of operating engine speeds", i.e., speeds ranging form approximately engine idle up to an engine speed corresponding to a typical vehicle cruising speed, such as 55 mph.

Referring still to Figure 2, it may be seen in graph No. 1 that the power steering pump P, which is the sole source of pressurized fluid for the system, delivers fluid through the conduit C1 to the motor-valve apparatus MV at a rate of Y at engine idle. The flow rate through the conduit C1 increases generally proportional to input speed until a flow rate of X occurs, and as engine speed increases further, all fluid in excess of X is recirculated internally within the pump P. As may be seen in graph No. 1, the flow rate X is substantially greater than the flow rate Y.

Pressurized fluid entering in the motor-valve apparatus MV flows through one of two alternative flow paths. When operation of the radiator cooling fan F is required, substantially all of the fluid entering the motor-valve apparatus MV flows through the ran motor, generally designated 41, as is illustrated by the solid line in graph No. 2. In this condition, the fan motor 41 is referred to as being «engaged», and practically no fluid passes through the temperature responsive bypass valve, as is illustrated by the lack of a solid line in graph No. 3.

Although the flow into the fan motor 41, in the engaged condition, is shown in graph No. 2 as substantially identical to the pump output shown in graph No. 1, it should be understood that such a relationship is not an essential feature of the present invention. Thus, the flow through the motor 41 could be somewhat less than the flow rate of X, although normally it would be desirable to utilize the full pump output to drive the motor 41, thereby minimizing the pressure drop needed to achieve a desired fan drive horsepower.

When very little cooling is required, and it is sufficient for the fan motor 41 to turn the fan F at a relatively low speed, the fan motor 41 is referred to as being «disengaged», as is illustrated by the dashed flow curves in graphs No. 2 and No. 3. From graph No. 2 it may be seen that a certain quantity of fluid will be permitted to drive the fan motor 41, while the remainder of the fluid flows through the temperature responsive bypass valve, bypassing the motor 41. It should be understood that the relationship of flow through the motor 41 (in the disengaged condition) and the input speed is not limited to that shown in graph No. 2, which is by way of example only, but may vary somewhat depending upon the set points of the system.

The outlet flow from the fan motor 41 and the bypass flow, if any, recombine within the motor-valve apparatus MV and flow into a steering gear flow control, such that regardless of the need for cooling, the input to the steering gear flow control may be represented by a flow curve substantially as in graph No. 1.

The purpose of the steering gear flow control is to provide to the steering gear mechanism SG the required quantity of fluid. As is well known to those skilled in the art, the conventional automotive steering gear mechanism is of the open-center type such that the steering gear is designed to have a generally constant flow rate therethrough, with the fluid pressure being dependent upon the steering load. One of the reasons for the conventional steering gears being open-center is the desire to use a fixed displacement power steering pump, the least expensive type of pump. However, as will be understood by those skilled in the hydraulics art, the inclusion of the steering gear flow control in the present invention effectively makes the overall system open-center, even if a closed-center steering gear were substituted for the conventional open-center steering gear. Therefore, it is within the scope of the present invention to use a steering gear mechanism SG which is not open-center, in which case, the steering gear flow control directs fluid to the steering gear SG only in response to a «demand» for fluid. Accordingly, the system preferably includes a steering gear flow control capable of communicating a fluid flow rate of approximtely Z (graph No. 4) to the steering gear mechanism SG over the entire range of operating engine speeds, the flow rate Z being substantially less than the flow rate X.

The steering gear flow control is operable to communicate substantially all of the inlet fluid flow in excess of Z (graph No. 5) through the conduit C4 to bypass the steering gear SG and recombine with the fluid leaving the steering gear by means of the conduit C3. Downstream of the junction of the conduits C3 and C4, the flow returning to the inlet of the power steering pump P is substantially identical to the flow being discharged from the pump P. It may also be seen that the present invention makes it possible to drive a hydraulic fan motor and operate a hydraulic steering gear mechanism in series, using a conventional power steering pump (with a modified flow control setting), with each of the fan motor and the steering gear receiving the quantity of fluid appropriate for its operation, independent of the other.

Motor-valve apparatus

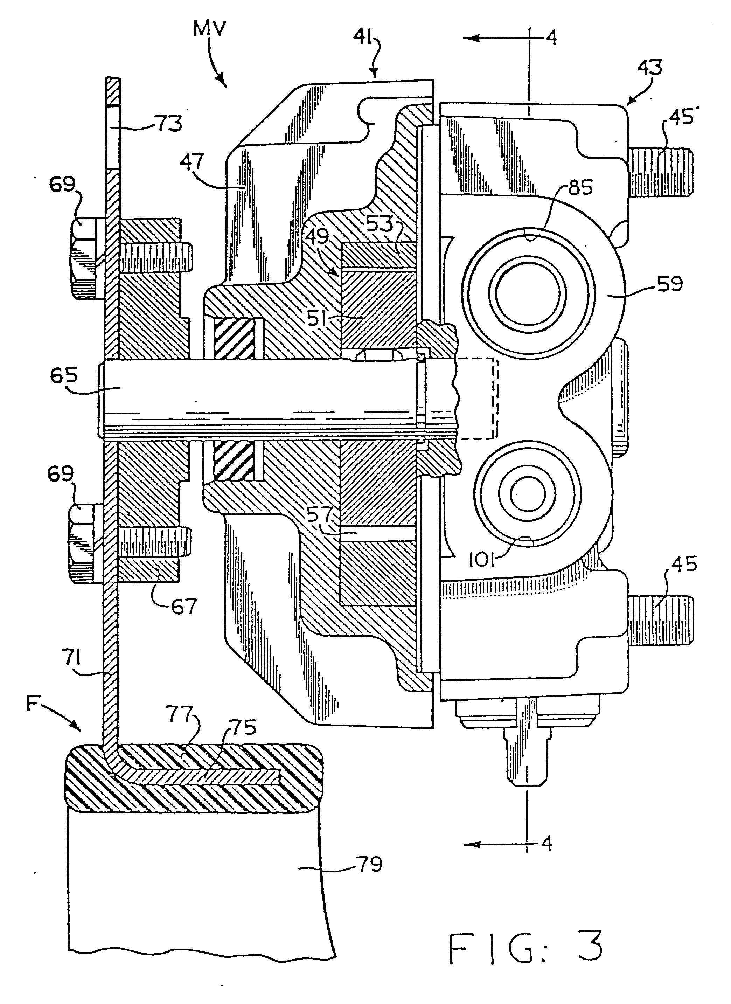

Referring now to figures 3–6, a preferred embodiment of the motor-valve apparatus MV will be described in detail. As may best be seen in figure 3, the motor-valve apparatus MV includes the fan motor 41 and a valve portion 43, held together by a plurality of threaded members 45. The fan motor 41 comprises a front cover member 47 and, disposed between the cover member 47 and the valve portion 43, a gerotor gear set 49. The gerotor gear set 49 includes an externally toothed inner rotor 51, eccentrically disposed within an internally toothed outer rotor 53. As is well known in the art of gerotor gear sets, the inner rotor 51, has one less tooth than the outer rotor 53, such that the toothed engagement of the rotors 51 and 53 defines a plurality of fluid volume chambers 57. It should be understood that the use of a gerotor gear set in the motor 41 is not an essential feature of the present invention. However, it is preferred that the motor comprise a positive displacement device, operable to translate a flow of pressurized fluid into a rotary output, and that the device define expanding and contracting fluid volume chambers. Examples of other types of devices which may be used herein are internal and external gear, sliding vane, radial piston or ball, and axial piston or ball.

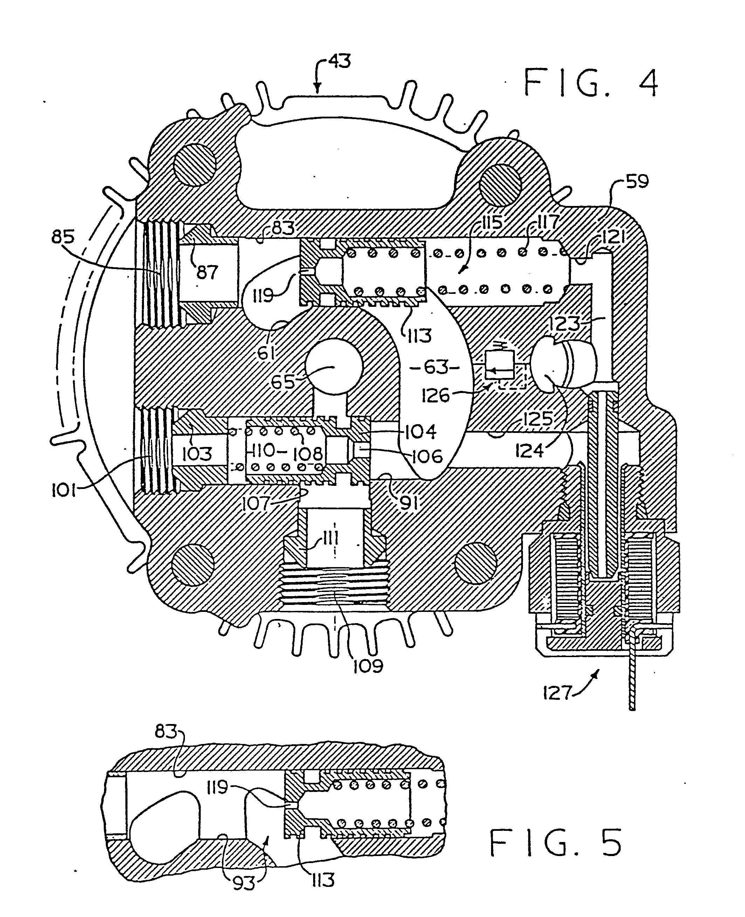

The valve portion 43 includes a housing 59 defining an inlet kidney port 61 and an outlet kidney port 63 (refer now also to Figure 4). As will be further described subsequently, pressurized fluid from the inlet kidney port 61 is communiciated to the volume chambers which are expanding, thereby turning the inner rotor 51, while fluid in the volume chambers which are contracting is discharged into the outlet kidney port 63. The inner rotor 51 is keyed to an output shaft 65 which drivingly engages a backup plate 67 (Figure 3).

The radiator cooling fan F, the specific design of which forms no part of the present invention, is shown in Figure 3 as a combination plastic and metal fan assembly. Attached to the backup plate 67 by a plurality of bolts 69 is a metal spider 71, including a plurality of openings 73 though which incoming air is permitted to flow. The metal spider includes an annular outer portion 75 embedded within, and surrounded by a hub portion 77 of a plastic fan, the plastic fan including a plurality of fan blades 79 extending radially from the hub 77.

Referring now to Figure 4, which is a transverse cross section through the valve portion 43, the construction and operation of preferred embodiment of the valve portion 43 will be described in detail. The housing 59 defines an inlet passage 83 having, at its left end in figure 4, a threaded inlet port 85. Disposed within the inlet passage 83 is a deformable fitting member 87 which sealingly engages a fitting (not shown) at the end of the conduit C1, when the fitting is threaded into the inlet port 85. The inlet passage 83 communicates with the inlet kidney port 61 to communicate pressurized inlet fluid from the pump P to the expanding volume chambers as described previously.

The housing 59 also defines an outlet passage 91 which, at its left end in Figure 4, defines a primary outlet port 101. Disposed within the outlet passage 91 is a deformable fitting 103 which sealingly engages a fitting (not shown) attached to the upstream end of the conduit C2, when the fitting is threaded into the primary outlet port 101. A secondary passage 107 communicates with the outlet passage 91 and defines a secondary outlet port 109. Disposed within the passage 107 is a deformable fitting 111 which sealingly engages a fitting (not shown) attached to the upstream end of the conduit C4, when the fitting is threaded into the secondary outlet port 109.

It may be seen that substantially all of the fluid entering the inlet port 85, whether it flows through the fan motor 41 or through the bypass passage 93, eventually enters the outlet passage 91. Disposed within the outlet passage 91 is the steering gear flow control (shown schematically in Figure 2), which includes a second bypass piston 104. The bypass piston 104 defines an orifice 106 which permits fluid flow from the outlet passage 91 to the primary outlet port 101, as was described in connection with Figure 2. The bypass piston 104 is biased to the left by the fluid pressure in the outlet passage 91, and is biased to the right by the combined force of a biasing spring 108 and the fluid pressure within a pressure chamber 110, it is believed that the principle of operation of the type of flow control arrangement disclosed herein is sufficiently well known to those skilled in the art to eliminate the necessity for a detailed description, especially in view of the description in European application No. ·79 900 580.6.

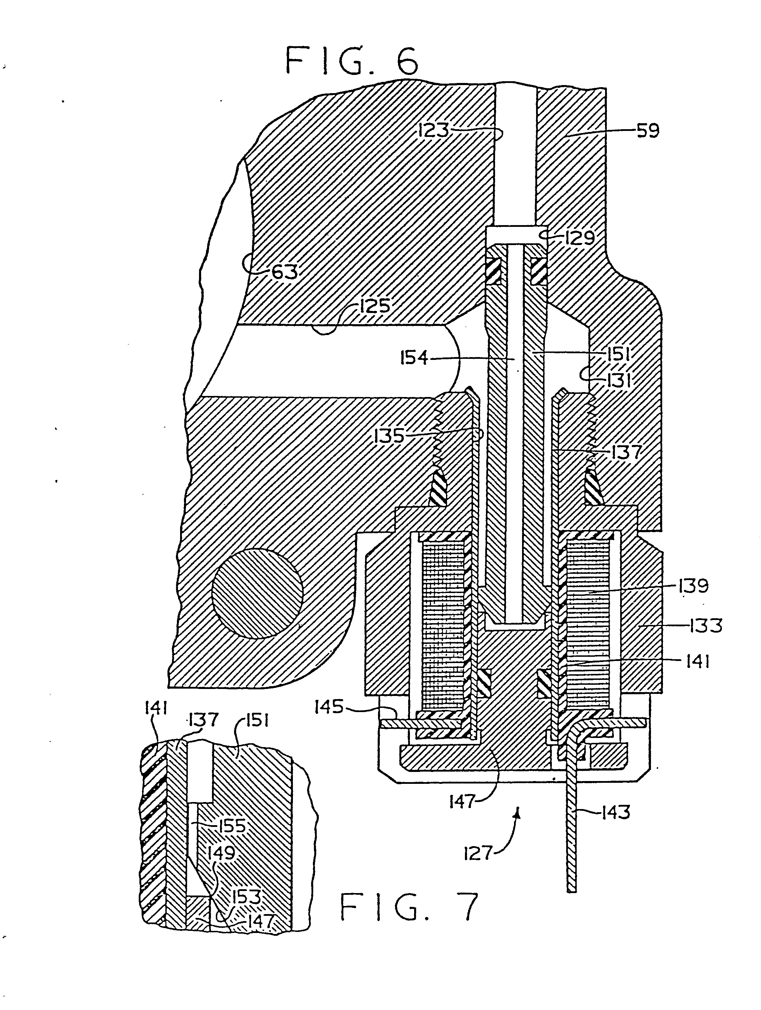

As may best be seen in Figure 5, the housing 59 also defines a bypass passage 93 which, in the subject embodiment, comprises a portion of the bore forming the inlet passage 83. It may be seen in Figures 4 and 5 that the outlet kidney port 63, in addition to receiving discharge fluid from the contracting volume chambers, provides fluid communication between the bypass passage 93 and the outlet passage 91. Therefore, for purposes of the subsequent description and claims, the term "bypass passage" will be understood to refer to, and include, both the passage 93 and the portion of the kidney port 63, axially disposed from the gerotor gear set 49.

Disposed within the bore defining the inlet passage 83 and bypass passage 93 is a temperature bypass valve piston 113, which cooperates with the bore to define a signal chamber 115. The bypass piston 113 is biased toward a first position (Figure 4) by a spring 117, and by the fluid pressure within the signal chamber 115. In the first position, the bypass piston 113 prevents fluid communication from the inlet passage 83 to the bypass passage 93, thus forcing substantially all of the fluid entering the inlet port 85 to pass through the inlet kidney port 61, and through and gerotor gear set 49. Thus, for any given fluid flow rate into the inlet port 85, the speed of the fan motor 41 will be at a maximum when the bypass piston 113 is in the first position.

The bypass piston 113 is biased toward a second position (Figure 5) by the fluid pressure within the inlet passage 83. With the bypass piston 113 in the second position, fluid flow is permitted from the inlet passage to the bypass passage 93 at a flow rate which is at least a major position of the flow rate X, which was described previously in connection with graph No. 3 in Figure 2. Thus, for any given flow rate into the inlet port 85, the speed of the fan motor 41 is at a minimum when the bypass piston 113 is in the second position.

It will be appreciated by those skilled in the art that the first and second positions illustrated in Figures 4 and 5 are somewhat exaggerated, for ease of illustration, and that the actual amount of travel of the bypass piston 113, between the first and second positions, would normally be substantially less than that indicated by Figures 4 and 5. The bypass piston 113 defines an orifice 119 which provides restricted fluid communication from the inlet passage 83 to the signal chamber 115. It is believed that the selection of the appropriate size for the orifice 119 would be obvious to those skilled in the art from a reading and understanding of the remainder of the specification.

Referring still to Figure 4, the housing 59 defines a passage providing relatively unrestricted fluid communication with the signal chamber 115, and a passage 123, providing relatively unrestricted fluid communication with the passage 121. In addition, the housing 59 defines a passage 125 which provides relatively unrestricted fluid communication with the outlet kidney port 63 (and the bypass passage), and thus, with the outlet passage 91, although the passage 125 could communicate directly with the secondary passage 107.

In threaded engagement with the housing 59, and associated with the passages 123 and 125, is a pilot valve assembly, generally designated 127, which will be described in greater detail subsequently, in connection with Figures 6 and 7. Referring still to Figure 4, the function of the pilot valve assembly 127 is to control the fluid communication between the passage 123 and the passage 125. For example, if the pilot valve assembly 127 prevents fluid communication from the passage 123 to the passage 125, pressurized fluid in the inlet passage 83 flows through the orifice 119, with the result that the fluid pressure is the same in the signal chamber 115 as in the inlet passage 83, and the spring 117 biases the bypass piston 113 to the first position (Figure 4). If, on the other hand, the pilot valve assembly 127 permits sufficient fluid communication from the passage 123 to the passage 125 (e.g., from about .01 gpm to about .1 gpm), the fluid pressure in the signal chamber 115 will be less than that in the inlet passage 83, and the pressure in the inlet passage 83 will overcome the biasing force of the spring 117 and bias the bypass piston 113 to the second position (Figure 5), permitting fluid flow from the inlet passage to the bypass passage. Therefore, the bypass piston 113 is not "position sensitive", as in European application No. 79 900 580.6, but is "signal pressure" sensitive. As a result, there is no need for mechanical presetting of the piston 113, and no concern about the tolerances of mechanical connectors, threaded members, etc., or the overall "tolerance stack".

One of the advantages of the present invention is related to the fact that the pressure drop across the bypass piston 113 is equal to the force of the spring 117. Because the fluid pressure in the signal chamber 115 is substantially equal to the pressure in the outlet kidney port 63 when the pilot valve 127 is "open", the force of the spring 117 effectively determines the pressure drop across the fan motor 41, and therefore, the minimum or "disengaged" fan speed (graph No. 3 in Figure 2).

In fluid communication with the passage 123 is an angled passageway 124, and a pressure relief valve 126, shown schematically in fluid communication with the outlet kidney port 63, although it could also communicate with the passage 125. The function of the relief valve 126 may be twofold: first, as a safety feature, it serves to relieve fluid pressure and prevent damage to the apparatus in the event of motor seizure. Secondly, because it communicates with the signal chamber 115, the relief setting of the valve 126 is effective to determine the maximum pressure drop across the fan motor 41, and therefore, the maximum fan speed.

Pilot valve assembly

Referring now to Figure 6, the pilot valve assembly 127 will be described in greater detail. The passage 123 opens into a slightly enlarged bore 129 which, in turn, opens into a substantially enlarged bore 131, which communicates with the passage 125. A portion of the bore 131 defines a set of internal threads which provide for threaded engagement between the pilot valve assembly 127 and the housing 59. The pilot valve assembly 127 includes an annular housing 133 which, in the subject embodiment, is made of a ferromagnetic material. The housing 133 includes a relatively larger lower portion, and a relatively smaller upper portion defining an inside diameter 135. Disposed in engagement with the inside diameter 135 is an elongated tubular member 137, which is non-magnetic for reasons which will become apparent.

The larger, lower portion of the housing 133 and the tubular member 137 cooperate to define an annular chamber within which is disposed an electromagnetic coil 139, wound on a plastic spool 141. Partially encapsulated within the spool 141 is a pair of terminals 143 and 145 which provide electrical connections for the coil 139 for energising it or not in response to changes in temperature.

Disposed partially within the lower portion of the tubular member 137 is a seat member 147 which, in the subject embodiment, is made of a ferro-magnetic material. As may best be seen in Figure 7, the seat member 147 terminates, at its upper end in an annular valve seat 149. Also disposed within the tubular member 137 is an elongated poppet member 151, having its upper end portion in sealing engagement with the bore 129 to prevent leakage therebetween, from the passage 123 to the passage 125. The poppet member 151 terminates, at its lower end, in a frusto-conical poppet surface 153, and defines an axial passage 154, providing fluid communication from the passage 123 to the lower surface of the poppet member 151. It will be appreciated by those skilled in the art that the area of the lower surface of poppet member 151 (including the portion of surface 153 inside the seat 149) must be slightly greater than the upper surface of the member 151, such that the pressurized fluid exerts a net upward biasing force.

With a voltage imposed across the terminals 143 and 145, energizing the electromagnetic coil 139, an electromagnetic field is generated, with the resulting lines of flux passing through the lower portion of the annular housing 133, the seat member 147, and the poppet member 151. Therefore, with the coil 139 energized, the resulting electromagnetic force on the poppet member 151 holds the poppet surface 153 in sealing engagement with the annular valve seat 149. Because energization of the coil 139 causes the poppet surface 153 to sealingly engage the valve seat 149, and prevent fluid communication from the passage 123 to the passage 125, the embodiment of the invention shown in Figures 6 and 7 is referred to as being of the "coil-on, fan-on" type.

Referring now to Figure 7, it may be seen that the enlarged portion of the poppet member 151, adjacent the surface 153, and which may engage the inside diameter of the tubular member 137, defines one or more axial grooves or notches 155 although any form of clearance between members 151 and 137 is sufficient. When the coil 139 is de-energized, fluid pressure acting on the poppet member 151, biasing it upwardly, opens an orifice between the seat 149 and the surface 153. Fluid is then permitted to flow from the passage 123, downward through the axial passage 154 in the poppet member 151, through the orifice between seat 149 and surface 153, then upwardly through the notches 155 and into the passage 125.

A major advantage of the Figure 6 embodiment is that it results in a desirable "match" of the "pressure drop vs. area" characteristics of the poppet member and the "force vs. distance" effect of the coil 139 on the poppet member 151. By way of further explanation, as the poppet surface 153 moves closer to the valve seat 149, thus reducing the orifice area therebetween, the pressure drop across the orifice incrases, thereby increasing the net upward biasing force acting on the poppet 151. At the same time, however, as the poppet member 151 moves closer to the valve seat 149, the gap between the seat 149 and the member 151 is reduced, such that there is an increasing attactive force on the poppet member 151, approximately balancing the increasing upward hydraulic force.

The coil-on, fan-on embodiment of figure 6 does have one possible drawback, however. In the event of a failure in the elecrical system, or any other defect which results in the inability to energize the coil 139, the bypass piston 113 will remain in the second position (Figure 5) resulting in very low fan speed, even under temperature conditions indicating a need for maximum cooling, and maximum fan speed.

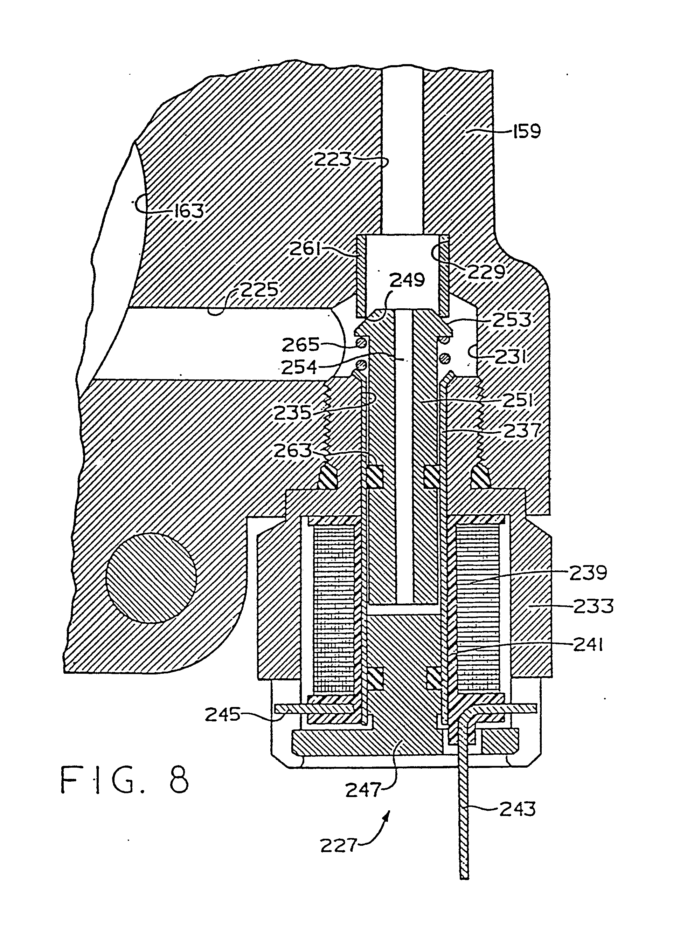

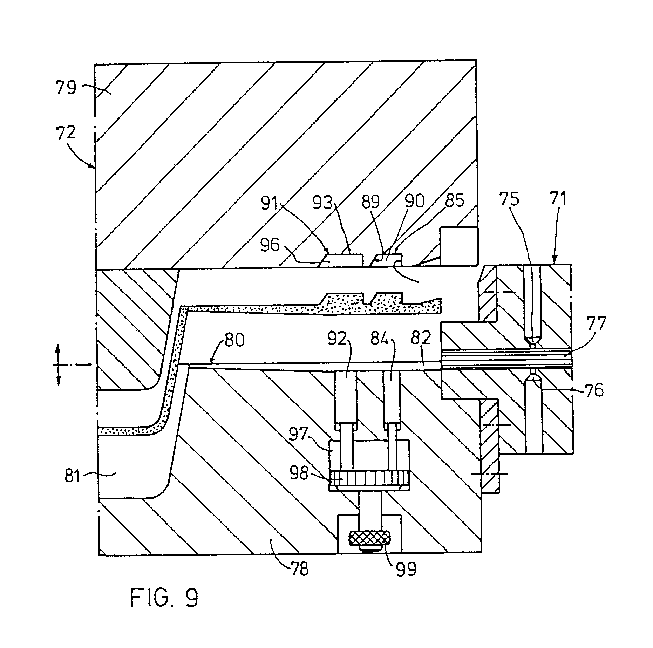

Referring now to Figure 8, there is illustrated an alternative embodiment of the pilot valve assembly, with like elements bearing like numerals, plus 100, and new elements bearing numerals above 260. The pilot valve assembly 227 includes the annular housing 233 in threaded engagement with the main housing 159, with the elongated tubular member 237 cooperating with the housing 233 to define the annular chamber within which is disposed the electromagnetic coil 239, wound on the plastic spool 241. Connceted to the coil 239 is the pair of terminals 243 and 245.

Disposed partially within the lower portion of the tubular member 237 is a member 247, which, in the Figure 8 embodiment, is not used to define a valve seat. Instead, disposed within the slightly enlarged bore 229 is a tubular member 261 which defines, at its lower end, the valve seat 249. Disposed within the member 237 is the elongated poppet member 251 which terminates, at its upper end, in the frusto-conical poppet surface 253, and defines the axial passage 254. Intermediate its opposite ends, the poppet member 251 includes a sealing member 263, which seals against the inside diameter of the tubular member 237 to prevent leakage therebetween, from the passage 223 to the passage 225.

The poppet member 251 is biased upwardly, as seen in Figure 8, by a compression spring 265 to maintain the poppet surface 253 in sealing engagement with the valve seat 249, when the electromagnetic coil 239 is deenergized. Thus, the embodiment shown in Figure 8 is of the "coil-off, fan-on" type (or "coil-on, fan-off"). It may be seen in Figure 8 that energization of the coil 239 will bias the poppet member 251 downwardly, in opposition to the biasing force of the spring 265, thereby moving the poppet surface 253 out of sealing engagement with the seat 249, and permitting fluid to flow from the passage 223 to the passage 225.

It should also be apparent to those skilled in the art that the embodiment of Figure 8 will be just the opposite of the embodiment of Figure 6 in regard to the advantage and disadvantage discussed above in connection with the Figure 6 embodiment. That is, in the Figure 8 embodiment, there is not the "match" of the "pressure drop vs. area" characteristics and the "force vs. distance" characteristics. However, the Figure 8 embodiment does have the advantage that in the event of an electrical failure or inability to energize the coil 239, the poppet member 251 will remain biased to the closed (seated) position, such that the pypass piston 113 will remain in its first position (Figure 4), and the fan will continue to operate at maximum speed, for any given input flow rate. It should also be noted that the pilot valve assemblies 127 and 227 are interchangeable, without the need for substantial modification of the rest of the motor-valve apparatus MV.

Although the pilot valve assemblies 127 and 227 have been described herein as being electrically actuated, it should be apparent to those skilled in the art that actuation of the poppet member may be accomplished by other means, such as a power pill. Thus, it is an important feature of the present invention, that the use of a bypass valve, responsive to signal pressure, permits the use of a temperature-responsive mechanism having a relatively lower output capability, or lower power requirement.

In addition, although the preferred embodiments were described as being of the "on-off" type, it is a feature of the invention that the pilot valve approach makes the apparatus easily adaptable to some form of modulation, so that the change from fan "off" to fan "on" (or vice versa) is gradual, over a range of temperatures between two limits, rather than being abrupt, or some intermediate fan speed can be maintained in response to a temperature within such a range.

In regard to the preferred embodiments being described as the "on-off" type, it should also be noted that the poppet member within the pilot valve could perform its function by "oscillating" between the on and off positions at some frequency, for example, in response to a pulse-width-modulated input signal, the duty cycle of which would vary with changes in the temperature.

Although the system is disclosed herein as including a fixed displacement pump, it should be apparent to those skilled in the art that a variable displacement pump, or a load sensing pump, could be used instead, without changing the significance of the present invention. It is intended that reference in the appended claims, to the pumping element being "operable to deliver fluid at a rate proportional to engine speed" includes both fixed and variable displacement pumps, as long as they are positive displacement.

Finally, although the present invention has been described in connection with an apparatus in which the motor and valve are integral, partially to simplify plumbing, it should be apparent that the motor and valve could be integral with another element of the system, such as the pump, without changing the function of the motor or valve.

## Claims

1. Motor-valve apparatus for use in a hydraulic fan drive system including a pump (P) having a fluid output port (31), a fluid inlet port, and a pumping element operable to deliver fluid at a rate proportional to engine speed, the pump (P) comprising the sole source of pressurize fluid for the system and including flow control valve means operable to limit the fluid delivery rate of the pump to X at higher engine speeds, said motor-valve apparatus comprising:

(a) housing means (59) defining an inlet port (85) for connection to the outlet port (31) of the pump (P) and further defining at least one outlet port (109), said one outlet port (109) being in fluid communication with the inlet port of the pump;

(b) a positive displacement, fluid pressure actuated rotary device (49) operably disposed within said housing means (59), said device being adapted to transmit torque to a fan (F), and defining expanding and contracting fluid chambers (57);

(c) said housing means (59) defining a fluid pressure port (61) and a fluid return port (63) communicating with said expanding and contracting fluid chambers (57) respectively;

(d) said housing means defining an inlet passage (83), an outlet passage (91), and a bypass passage (93) communicating between said inlet and outlet passages (83, 91), said inlet passage (83) permitting fluid communication between said inlet port (85) and said pressure port (61), and said outlet passage (91) providing fluid communication between said return port (63) and said outlet port (109);

(e) bypass valve means disposed in said inlet passage (83) and including a bypass valve member (113) movable between a first position substantially preventing fluid communication from said inlet passage (83) to said bypass passage (93), and a second position permitting fluid flow from said inlet passage (83) to said bypass passage (93) at a flow rate which is at least a major portion of X, the bypass flow through said bypass passage (93) and the return flow through said return port (63) being recombined in said outlet passage (91);

(f) said valve member (113) being biased toward said second position by fluid pressure in said inlet passage (83);

(g) said valve member (113) and said housing means (59) co-operating to define a signal chamber (115), said valve member (113) being biased toward said first position by fluid pressure in said signal chamber (115);

(h) means (119) communicating pressurised fluid into said signal chamber (115); and

(i) pilot valve means (127) movable between a first position blocking fluid communication between said signal chamber (115) and said outlet passage (91), and a second position permitting fluid communication from said signal chamber (115) to said outlet passage (91); and

(j) wherein the force required to move the pilot valve means is a magnetic force provided by an electromagnetic coil (139, 239).

2. Motor-valve apparatus as claimed in claim 1 wherein said communicating means (119) comprises an orifice in said valve member (113) permitting restricted fluid communication from said inlet passage (83) to said signal chamber (115).

3. Motor-valve apparatus as claimed in claim 1 or 2 including spring means (117) disposed in said signal chamber (115) biasing said valve member (113) toward said first position.

4. Motor-valve apparatus as claimed in claim 1, 2 or 3 wherein said pilot valve means (127) includes a poppet member (151) movable, in response to changes in a predetermined temperature condition, between said first and second positions.

5. Motor-valve apparatus as claimed in claim 4 wherein said electromagnetic coil (139) is operable to exert varying biasing forces on said poppet member (151) in response to varying electrical inputs.

6. Motor-valve apparatus as claimed in claim 4, wherein the position of said poppet member (151) is infinitely variable between said first and second positions corresponding to changes in said predetermined temperature conditions between a first temperature condition and a second temperature condition.

7. Motor-valve apparatus as claimed in claim 5, wherein said poppet member (151) is biased toward said first position by said electromagnetic coil means (139) when said coil means (139) is energized.

8. Motor-valve apparatus as claimed in claim 5, wherein said poppet member (151) is biased toward said second position by said electromagnetic coil means (139) when said coil means (139) is energized.

9. Motor-valve apparatus as claimed in any preceding claim for use in a hydraulic fan drive system wherein the pump (P) has a fluid delivery rate of Y at engine idle, X being substantially greater than Y, and which system further includes an oper-centre steering gear mechanism (56) having inlet and outlet ports, the outlet port of the steering gear mechanism being in fluid communication with the inlet port of the pump, the steering gear mechanism being adapted to receive a fluid flow rate of Z over substantially the entire range of operating engine speeds, X being substantially greater than Z, said motor-valve apparatus comprising a further outlet port (101) in the housing means (59) for connection to the inlet port of the steering gear mechanism, the outlet passage (91) providing fluid communication betweeen said return port (63) and both outlet ports (101, 109), and the positive displacement, fluid pressure actuated rotary device (49) having a displacement operable to provide a desired fan speed, at engine idle, corresponding to a fluid flow rate of approximately Y, and a peak fan speed corresponding to a fluid flow rate of approximately X.

10. Motor-valve apparatus as claimed in claim 9 including flow control valve means (104) disposed in said outlet passage (91) and being operable to maintain a fluid flow rate of Z from said outlet passage (91) to the first outlet port (109) over substantially the entire range of operating engine speeds and to communicate substantially all fluid flow in excess of Z from said outlet passage (91) to said further outlet port (101).

11. Motor-valve apparatus as claimed in any of claims 1 to 8 for use in a hydraulic fan drive system further including an auxiliary fluid pressure operated device (56) having inlet and outlet ports, the outlet port of the auxiliary device (56) being in fluid communication with the inlet port of the pump (P), the auxiliary device (56) being adapted to receive a fluid flow rate of Z over substantially the entire range of operating engine speeds, a fluid flow rate of X being communicated to said motor-valve apparatus at relatively higher engine speeds, X being substantially greater than Z, said motor valve apparatus comprising a first further outlet port (101) for connection to the inlet port of the auxiliary device, the outlet passage (91) providing fluid communication between the return port (63) and both outlet ports (101, 109).

**Revendications**

1. Un appareil moteur à soupape conçu pour être utilisé dans un système d'entraînement hydraulique de ventilateur comportant une pompe (P) ayant un orifice (31) de sortie de fluide, un orifice d'entrée de fluide et un élément de pompage actionnable pour refouler du fluide à un débit proportionnel à la vitesse du moteur, la pompe (P) constituant la seule source de fluide sous pression pour le système et comportant des moyens formant soupape de contrôle d'écoulement actionnables pour limiter le débit de refoulement du fluide de la pompe à X, aux vitesse supérieures du moteur, ledit appareil moteur à soupape comprenant:

- a) des moyens (59) formant carter comportant un orifice d'entrée (85) conçu pour être raccordé à l'orifice de sortie (31) de la pompe (P) et comportant, en outre, au moins un premier orifice de sortie (109), ledit premier orifice de sortie (109) étant en communication fluidique avec l'orifice d'entrée de la pompe;
- b) un dispositif rotatif actionné par la pression de fluide, volumétrique, (49), monté de manière opérante à l'intérieur desdits moyens (59) formant carter, ledit dispositif étant adapté pour transmettre un couple à un ventilateur (F), et comportant des chambres (57) à fluide qui s'agrandissent et se contractent;
- c) lesdits moyens (59) formant carter comportant un orifice (61) à pression de fluide et un orifice (63) de retour du fluide qui communiquent respectivement avec les chambres (57) à fluide qui s'agrandissent et avec celles qui se contractent;
- d) lesdits moyens formant carter comprenant un passage d'entrée (83), un passage de sortie (91) et un passage de dérivation (93) qui établit une communication entre lesdits passages d'entrée et de sortie (83, 91), ledit passage d'entrée (83) permettant la communication fluidique entre ledit orifice d'entrée (85) et ledit orifice de pression (61) et ledit passage de sortie (91) assurant la communication fluidique entre ledit orifice de retour (63) et ledit orifice de sortie (109);
- e) des moyens formant soupape de dérivation disposés dans ledit passage d'entrée (83) et comportant un obturateur (113) de soupape de dérivation, mobile entre une première position empêchant sensiblement la communication fluidique à partir dudit passage d'entrée (83) jusqu'audit passage de dérivation (93) et une seconde position permettant l'écoulement du fluide à partir dudit passage d'entrée (83) jusqu'audit passage de dérivation (93) à un débit qui est au moins une partie principale de X, l'écoulement de dérivation par ledit passage de dérivation (93) et l'écoulement de retour par ledit orifice de retour (63) étant recombinés dans ledit passage de sortie (91);
- f) ledit obturateur (113) étant sollicité en direction de ladite seconde position par la pression de fluide régnant dans ledit passage d'entrée (83);
- g) ledit obturateur (113) et lesdits moyens (59) formant carter coopérant pour former une chambre (115) à signal, ledit obturateur (113) étant sollicité en direction de ladite première position par la pression de fluide régnant dans ladite chambre (115) à signal;
- h) des moyens (119) transmettant du fluide sous pression à ladite chambre (115) à signal;
- i) des moyens (127) formant soupape pilote mobiles entre une première position interrompant la communication fluidique entre ladite chambre (115) à signal et ledit passage de sortie (91) et une seconde position permettant la communication fluidique à partir de ladite chambre (115) à signal jusqu'audit passage de sortie (91), et

- j) dans lequel la force requise pour déplacer les moyens formant soupape pilote est une force magnétique produite par un enroulemen électromagnétique (139, 239).

2. Appareil moteur à soupape tel que revendiqué dans la revendication 1 dans lequel lesdits moyens de communication (119) comprennent un orifice formé dans ledit obturateur (113) permettant une communication fluidique étranglée à partir dudit passage d'entrée (83) jusqu'à ladite chambre (115) à signal.

3. Appareil moteur à soupape tel que revendiqué dans la revendication 1 u 2 comprenant des moyens élastiques (117) disposés dans ladite chambre (115) à signal sollicitant ledit obturateur (113) en direction de ladite première position.

4. Appareil moteur à soupape tel que revendiqué dans la revendication 1, 2 ou 3, dans lequel lesdits moyens (127) formant soupape pilote comprennent un organe (151) formant soupape champignon mobile, en réponse aux changements d'une condition de température prédéterminée, entre lesdites première et seconde positions.

5. Appareil moteur à soupape tel que revendiqué dans la revendication 4 dans lequel ledit enroulement électromagnétique (139) est actionnable pour exercer ds forces de sollicitation variables sur ledit organe (151) formant soupape champignon en réponse à des signaux d'entrée électriques variables.

6. Appareil à moteur à fluide tel que revendiqué dans la revendication 4 dans lequel la position dudit organe (151) formant soupape champgnon est variable à l'infini entre lesdites première et seconde positions d'une manière correspondante aux changements desdites conditions de température prédéterminées entre une première condition de température et une seconde condition de température.

7. Appareil moteur à soupape tel que revendiqué dans la revendication 5, dans lequel ledit organe (151) formant soupape champignon est sollicité vers ladite première position par lesdits moyens (139) formant enroulement électromagnétique (139) lorsque lesdits moyen (139) formant enroulement sont excités.

8. Appareil moteur à soupape tel que revendiqué dans la revendication 5, dans lequel ledit organe (151) formant soupape champignon est sollicité vers ladite seconde position par lesdits moyens (139) formant enroulement électromagnétique (139) lorsque lesdits moyens (139) formant enroulement sont excités.

9. Appareil moteur à soupape tel que revendiqué dans une quelconque revendication précédente conçu pour être utilisé dans un système d'entraînement hydraulique dans lequel la pompe (P) a un débit de refoulement de fluide de Y au ralenti du moteur, X étant sensiblement supérieur à Y, ce système comprenant, en outre, un mécanisme (SG) de direction à centre ouvert ayant des orifices d'entrée et de sortie, l'orifice de sortie du mécanisme de direction étant en communication fluidique avec l'orifice d'entrée de la pompe, le mécanisme de direction étant adapté pour recevoir un débit de fluide de Z sur la quasi-totalité de la gamme des vitesses de fonctionnement du moteur, X étant sensiblement supérieur à Z, ledit appareil moteur à soupape comprenant un autre orifice de sortie (101) formé dans les moyens (59) formant carter conçu pour être raccordé à l'orifice d'entrée du mécanisme de direction, le passage de sortie (91) assurant la communication fluidique entre ledit orifice de retour (63) et les deux orifices de sortie (101, 109) et le dispositif rotatif (49) actionné par une pression de fluide, volumétrique, ayant un déplacement agissant pour produire une vitesse désirée du ventilateur, au ralenti du moteur, correspondant à un débit de fluide d'approximativement Y et une vitesse de pointe du ventilateur correspondant à un débit de fluide d'approximativement X.

10. Appareil moteur à soupape tel que revendiqué dans la revendication 9 comportant des moyens (104) formant soupape de commande de débit disposés dans ledit passage de sortie (91) et actionnables pour maintenir un débit de fluide de Z à partir dudit passage de sortie (91) jusqu'au premier orifice de sortie (109) sur la quasi-totalité de la gamme des vitesses de fonctionnement du moteur et pour envoyer la quasi-totalité du débit de fluide en excès de Z à partir dudit passage de sortie (91) jusqu'audit autre orifice de sortie (101).

11. Appareil moteur à soupape tel que revendiqué dans l'une quelconque des revendications 1 à 8 conçu pour être utilisé dans un système d'entraînement hydraulique de ventilateur comprenant, en outre, un dispositif auxiliaire (SG) actionné par la pression de fluide ayant des orifices d'entrée et de sortie, l'orifice de sortie du dispositif auxiliaire (SG) étant en communication fluidique avec l'orifice d'entrée de la pompe (P), le dispositif auxiliaire (SG) étant adapté pour recevoir un débit de fluide de Z sur la quasi-totalité de la gamme des vitesses de fonctionnement du moteur, un débit de fulide de X étant envoyé audit appareil moteur à soupape aux vitesses relativement supérieures du moteur, X étant sensiblement supérieur à Z, ledit appareil moteur à soupape comprenant un premier orifice de sortie supplémentaire (101) conçu pour être raccordé à l'orifice d'entrée du dispositif auxiliaire, le passage de sortie (91) assurant la communication fluidique entre l'orifice de retour (63) et les deux orifices de sortie (101, 109).

## Patentansprüche

1. Motorventilvorrichtung zur Verwendung in einem hydraulischen Ventilatorantriebs-System mit einer Pumpe (P) mit einer Strömungsmittelauslassöffnung (31), einer Strömungsmittelauslassöffnung und einem Pumpelement, welches zur Lieferung von Strömungsmittel mit einer Geschwindigkeit proportional zur Motordrehzahl betätigbar ist, wobei die Pumpe (P) die einzige Quelle für die Unterdrucksetzung des Strömungsmittels für das System ist und Strömungssteuerventilmittel aufweist, die betätigbar sind, um die Strömungsmittelliefergeschwindigkeit oder Rate der Pumpe auf X bei höheren Motordrehzahlen zu beschränken, wobei die Motorventilvorrichtung folgendes aufweist:

a) Gehäusemittel (59), welche eine Einlassöffnung (85) definieren, und zwar zur Verbindung mit der Auslassöffnung (31) der Pumpe (P), wobei die Gehäusemittel ferner mindestens eine Auslassöffnung (109) definieren, die in Strömungsmittelverbindung mit der Einlassöffnung der Pumpe steht;

b) eine eine positive Verdrängung aufweisende Strömungsmitteldruck betätigte Drehvorrichtung (49), die betriebsmässig innerhalb der Gehäusemittel (59) angeordnet ist und dazu dient, Drehmoment auf einen Ventilator (F) zu übertragen und die sich ausdehnende und zusammenziehende Strömungsmittelkammern (57) definiert;

c) wobei die Gehäusemittel (59) eine Strömungsmitteldrucköffnung (61) und eine Strömungsmittelrückkehröffnung (63) definieren, die jeweils mit den Ausdehnungs- und Zusammenziehungs-Strömungsmittelkammern (57) in Verbindung stehen;

d) wobei die Gehäusemittel ferner folgendes definieren: einen Einlassdurchlass (83), einen Auslassdurchlass (91) und einen Bypassdurchlass (93) in Verbindung zwischen den Einlass- und Auslassdurchlässen (83, 91), wobei der Einlassdurchlass (83) Strömungsmittelverbindung zwischen der Einlassöffnung (85) und der Drucköffnung (61) gestattet, und wobei der Auslassdurchlass (91) Strömungsmittelverbindung zwischen der Rückführöffnung (83) und der Auslassöffnung (109) vorsieht;

e) Bypassventilmittel, angeordnet in dem Einlassdurchlass (83) und einschliesslich eines Bypassventilglieds (113), beweglich zwischen einer ersten Position, um im wesentlichen die Strömungsmittelverbindung von dem Einlassdurchlass (83) zu dem Bypassdurchlass (93) zu verhindern und mit einer zweiten Position, welche den Strömungsmittelfluss von dem Einlassdurchlass (83) zu dem Bypassdurchlass (93) gestattet, und zwar mit einer Strömungsgeschwindigkeit, die mindestens ein Hauptteil von X ist, wobei die Bypassströmung durch den Bypassdurchlass (93) und die Rückflussströmung durch die Rückflussöffnung (93) in dem Auslassdurchlass (91) rekombiniert werden;

f) wobei das Ventilglied (113) durch Strömungsmitteldruck in dem Einlassdurchlass (83) in die zweite Position vorgespannt ist;

g) wobei das Ventilglied (113) und die Gehäusemittel (59) zur Definition einer Signalkammer (115) zusammenarbeiten, wobei das Ventilglied (113) zur ersten Position hin durch Strömungsmitteldruck in der Signalkammer (115) vorgespannt ist;

h) Mittel (119) zur Verbindung des unter Druck stehenden Strömungsmittels in die Signalkammer (115) hinein,

i) Pilotventilmittel (127), die zwischen einer ersten und einer zweiten Position bewegbar sind, wobei in der ersten Position die Strömungsmittelverbindung zwischen der Signalkammer (115) und dem Auslassdurchlass (91) blockiert ist, während in der zweiten Position die Strömungsmittelverbindung von der Signalkammer (115) zu dem Auslassdurchlass (91) gestattet ist, und

j) wobei die zur Bewegung der Pilotventilmittel erforderliche Kraft eine durch eine elektromagnetische Spule (139, 239) vorgesehene Magnetkraft ist.

2. Motorventilvorrichtung nach Anspruch 1, wobei die Verbindungsmittel (119) eine der Zumessöffnung in dem Ventilglied (113) aufweisen, welche eine beschränkte Strömungsmittelverbindung von dem Einlassdurchlass (83) zu der Signalkammer (115) gestattet.

3. Motorventilvorrichtung nach Anspruch 1 oder 2, mit Federmitteln (117), angeordnet in der Signalkammer (115) zum Vorspannen des Ventilglieds (113) zur ersten Position hin.

4. Motorventilvorrichtung nach Anspruch 1, 2 oder 3, wobei die Pilotventilmittel (127) ein Kopfglied (151) aufweisen, welches infolge von Änderungen in einem vorbestimmten Temperaturzustand zwischen den ersten und zweiten Positionen bewegbar ist.

5. Motorventilvorrichtung nach Anspruch 4, wobei die elektromagnetische Spule (139) zur Ausübung unterschiedlicher Vorspannkräfte auf das Kopfglied (151) infolge von sich ändernden elektrischen Eingangsgrössen betätigbar ist.

6. Motorventilvorrichtung nach Anspruch 4, wobei die Position des Kopfglieds (151) unendlich fein variabel zwischen den ersten und zweiten Positionen ist, und zwar entsprechend den Änderungen der vorbestimmten Temperaturbedingungen zwischen einer ersten Temperaturbedingung und einer zweiten Temperaturbedingung.

7. Motorventilvorrichtung nach Anspruch 5, wobei das Kopfglied (151) zur ersten Position hin durch elektromagnetische Spulenmittel (139) dann vorgespannt ist, wenn die Spulenmittel (139) erregt sind.

8. Motorventilvorrichtung nach Anspruch 5, wobei das Kopfglied (151) zur zweiten Position hin durch die elektromagnetischen Spulenmittel (139) dann vorgespannt ist, wenn die Spulenmittel (139) erregt sind.

9. Motorventilvorrichtung nach einem der vorhergehenden Ansprüche zur Verwendung in einem hydraulischen Ventilatorantriebs-System, wobei die Pumpe (P) eine Strömungsmittellieferrate von Y bei leerlaufendem Motor besitzt, X wesentlich grösser als Y ist und das System ferner einen Lenkgetriebemechanismus (56) mit offenem Zentrum und mit Einlass- und Auslassöffnungen aufweist, wobei die Auslassöffnung des Lenkgetriebemechanismus in Strömungsmittelverbindung mit der Einlassöffnung der Pumpe steht, und der Lenkgetriebemechanismus geeignet ist, eine Strömungsmittelflussrate oder Geschwindigkeit von Z über im wesentlichen den gesamten Bereich von Motorbetriebsdrahzahlen zu empfangen, wobei X wesentlich grösser als Z ist, und wobei die Motorventilvorrichtung eine weitere Auslassöffnung (101) in den Gehäusemitteln (59) aufweist, und zwar zur Verbindung mit der Einlassöffnung der Lenkgetriebevorrichtung, wobei der Auslassdurchlass (91) eine Strömungsmittelverbindung zwischen der Rücklauföffnung (63) und den beiden Auslassöffnungen (101, 109) vorsieht, und wobei ferner die eine positive Verdrängung aufweisende Strömungsmitteldruck betätigte Drehvorrichtung (49) eine Verdrängungen besitzt, die betätigbar ist, um eine gewünschte Ventilatorgeschwindigkeit bei leerlaufendem Motor entsprechend einer Strömungsmittelflussrate von annähernd Y vorzusehen, und eine Spitzenventilatorgeschwindigkeit oder Drehzahl entsprechend eine Strömungsmittelflussrate von annähernd X.

10. Motorventilvorrichtung nach Anspruch 9, einschliesslich Strömungssteuerventilmitteln (104), angeordnet in dem Auslassdurchlass (91) und betätigbar zur Aufrechterhaltung einer Strömungsmittelflussrate von dem Auslassdurchlass (91) zu der ersten Auslassöffnung (109) über im wesentlichen den gesamten Bereich von Motorbetriebsdrehzahlen hinweg, und zur Verbindung von im wesentlichen des gesamten Strömungsmittelflusses oberhalb von Z von dem Auslassdurchlass (91) zu der erwähnten weiteren Auslassöffnung (101).

11. Motorventilvorrichtung nach einem der Ansprüche 1 bis 8 zur Verwendung in einem hydraulischen Ventilatorantriebs-System, wobei ferner eine hilfs-strömungsmittel-druckbetätigte Vorrichtung (56) vorgesehen ist, die Einlass- und Auslassöffnungen aufweist, wobei die Auslassöffnung der Hilfsvorrichtung (56) in Strömungsmittelverbindung mit der Einlassöffnung der Pumpe (P) steht, und wobei die Hilfsvorrichtung (56) in der Lage ist, eine Strömungsmittelflussrate von Z über im wesentlichen den gesamten Motorbetriebsdrehzahlbereich hinweg zu empfangen, wobei ferner eine Strömungsmittelflussrate von X an die Motorventilvorrichtung bei relativ höheren Motordrehzahlen geliefert wird, wobei X wesentlich grösser als Z ist, und wobei ferner die Motorventilvorrichtung eine erste weitere Auslassöffnung (101) zur Verbindung mit der Einlassöffnung der Hilfsvorrichtung aufweist, wobei der Auslassdurchlass (91) eine Strömungsmittelverbindung zwischen der Rückflussöffnung (63) und beiden Auslassöffnungen (101, 109) vorsieht.

FIG. 1

EP 0 020 563 B2

FIG. 2

No 1

Q

Y

X

SPEED

No 2

Y

X

P

31

C1

MV

TEMP.
BYPASS
VALVE

No 3

F

41

No 5

X-Z

C4

STEERING GEAR
FLOW CONTROL

No 4

Z

C3

SG

C2

EP 0 020 563 B2

FIG: 3

FIG. 4

FIG. 5

FIG. 6

FIG. 7

FIG. 8

FIG. 9